# EUROPEAN PATENT APPLICATION

(11) **EP 4 755 708 A1**
(43) Date of publication of application: **10.06.2026**
(21) Application number: 24861608.8
(22) Date of filing: 21.06.2024
(51) Int. Cl.: B60N 2/28

(54) **SEAT BODY SWIVEL STRUCTURE AND CHILD SAFETY SEAT**

(30) Priority: 07.09.2023 CN 202322429769 U
(71) Applicant: Max-Inf (Ningbo) Baby Product Co., Ltd, Ningbo, Zhejiang 315000 (CN)
(72) Inventor: ZHOU, Xiaolin, Ningbo, Zhejiang 315000 (CN)
(74) Representative: Santarelli
(86) International application number: PCT/CN2024/100602
(87) International publication number: WO 2025/050762

(57) **Abstract**

A seat body swivel structure and a child safety seat. The seat body swivel structure comprises a base (1), a rotary disc assembly (2), an electric rotation assembly (3) and a manual rotation assembly (4). The rotary disc assembly (2) comprises a rotary disc (21), a gear disc (22) and a locking assembly (23) for locking or unlocking relative positions of the rotary disc (21) and the gear disc (22). The rotary disc (21) is adapted to be connected to a seat body, and the gear disc (22) is connected to the base (1). When the rotary disc (21) and the gear disc (22) are locked to each other, the electric rotation assembly (3) drives the gear disc (22) to drive the seat body to rotation relative to the base (1); when the rotary disc (21) and the gear disc (22) are unlocked from each other, the manual rotation assembly (4) drives the rotary disc (21) to drive the seat body to rotation relative to the base (1). The seat body swivel structure combines electric and manual rotation modes, which enables parents or users to select proper rotation modes according to actual requirements, thus improving the usability, safety and flexibility of child safety seats.

## Description

### Technical Field

The present disclosure relates to the field of automotive safety products technology, and in particular, to a seat body swivel structure and a child safety seat.

### Background of the Invention

With the continuous improvement of social consumption levels, technologies across various industries are also continuously being upgraded and iterated. Against this background, an increasing number of parents are paying greater attention to safety issues when children are seated in child safety seats, while also placing high importance on the convenience of seat use. However, child safety seats currently available on the market have certain limitations with respect to seat rotation functions. For example, some seats allow rotation of the seat body only through manual operation, while others rely entirely on electric devices to perform the rotation. As a result, ease of use is reduced, and such seats may be unable to respond effectively to unexpected situations, thereby causing unnecessary inconvenience to parents.

### Summary of the Invention

To address at least one of the aforementioned problems, the present disclosure first provides a seat body swivel structure, including a base, a rotary disc assembly, an electric rotation assembly, and a manual rotation assembly. The rotary disc assembly includes a rotary disc, a gear disc, and a locking assembly for locking or unlocking a relative position of the rotary disc and the gear disc. The rotary disc is adapted to be connected to the seat body, and the gear disc is connected to the base. When the rotary disc and the gear disc are locked relative to each other, the electric rotation assembly drives the gear disc to rotate the seat body relative to the base. When the rotary disc and the gear disc are unlocked relative to each other, the manual rotation assembly drives the rotary disc to rotate the seat body relative to the base.

Optionally, the base is mounted with a slip ring for power supply and communication. The slip ring includes a slip ring body and a wire that are rotatably connected to each other. The wire is adapted to be electrically connected to the seat. The slip ring body is connected to the base. The rotary disc is provided with a cable pass-through hole for the wire to pass through.

Optionally, the electric rotation assembly includes a drive motor and a worm gear assembly that are in a transmission connection with each other. The worm gear assembly includes a worm wheel and a worm that mesh with each other. The worm is connected to a motor shaft of the drive motor, and the gear disc is provided with an inner ring gear that meshes with the worm wheel.

Optionally, a circuit board is further provided, a position signal sensor is arranged on the base, and a plurality of position signal devices are arranged on the gear disc at intervals. One of the plurality of position signal devices is selectively sensed in cooperation with the position signal sensor. The position signal sensor and the drive motor are both electrically connected to the circuit board.

Optionally, the manual rotation assembly includes a linkage base and a releasing switch that are movably connected to each other. The linkage base is movably connected to the rotary disc. When the linkage base moves relative to the rotary disc, the releasing switch drives the locking assembly to unlock or lock.

Optionally, the linkage base is provided with a sliding groove and an inclined slot, the rotary disc is provided with a track that is slidably connected to the sliding groove along a front and rear direction, and the releasing switch is provided with a movable pin slidably connected to the inclined slot. When the linkage base moves in the front and rear direction, the releasing switch moves in a left and right direction under the cooperation of the movable pin and the inclined slot, so as to enable the releasing switch to drive the locking assembly to unlock or lock.

Optionally, the manual rotation assembly further includes a pull cable and a first return member, two ends of the first return member being connected to the rotary disc and the linkage base, respectively, and the pull cable being connected to the linkage base.

Optionally, the locking assembly includes rotation position pins and second return members. The gear disc is provided with shaft recesses for hinged connection with the rotation position pins. Two ends of each second return member are respectively connected to the respective shaft recess and the respective rotation position pin. The rotary disc is provided with a gear position groove adapted for cooperating with the rotation position pins. The releasing switch is movably mounted in the gear position groove.

Optionally, the releasing switch is provided with a first inclined surface, and each of the rotation position pins is provided with a second inclined surface adapted to abut against the first inclined surface.

Compared to existing technologies, the seat body swivel structure in the present disclosure adopts a locking assembly to lock or unlock the rotary disc and gear disc, combining both electric and manual rotation means. This allows parents or users to choose the appropriate rotation means according to their actual needs. The electric rotation means is suitable for daily use, allowing to rotate the seat via the electric rotation assembly. The manual rotation means provides a backup rotation option when the electric rotation assembly is not operational, independent of power supply. As a result, the convenience, safety, and flexibility of using the child safety seat are improved.

Furthermore, the present disclosure provides a child safety seat, including the aforementioned seat body swivel structure.

Compared to existing technologies, the child safety seat in the present disclosure has the same advantages as the aforementioned seat body swivel structure, which will not be repeated herein.

### Brief Description of the Drawings

FIG. 1 is a partial exploded view of the seat body swivel structure according to an embodiment of the present disclosure;
FIG. 2 is another partial exploded view of the seat body swivel structure according to an embodiment of the present disclosure;
FIG. 3 is yet another partial exploded view of the seat body swivel structure according to an embodiment of the present disclosure;
FIG. 4 is a structural view of the seat body swivel structure according to an embodiment of the present disclosure, at an initial position of manual rotation;
FIG. 5 is a cross-sectional view of the seat body swivel structure according to an embodiment of the present disclosure, at the initial position of manual rotation;
FIG. 6 is an enlarged view of part A shown in FIG. 5;
FIG. 7 is another cross-sectional view of the seat body swivel structure according to an embodiment of the present disclosure, at the initial position of manual rotation;
FIG. 8 is a structural view of the seat body swivel structure according to an embodiment of the present disclosure when manual rotation is unlocked;
FIG. 9 is a perspective view of the seat body swivel structure according to an embodiment of the present disclosure during an electric rotation.

Reference signs are as follows:
1, base; 2, rotary disc assembly; 21, rotary disc; 211, cable pass-through hole; 212, track; 213, gear position groove; 22, gear disc; 221, inner ring gear; 222, shaft recess; 23, locking assembly; 231, rotation position pin; 2311, second inclined surface; 232, second return member; 3, electric rotation assembly; 31, drive motor; 32, worm gear assembly; 321, worm gear; 322, worm; 4, manual rotation assembly; 41, linkage base; 411, sliding groove; 412, inclined slot; 42, releasing switch; 421, movable pin; 422, first inclined surface; 43, pull cable; 44, first return member; 5, slip ring; 6, position signal sensor.

### Detailed Description of Embodiments

To make the above-mentioned objectives, features and advantages of the present disclosure more apparent and understandable, the specific embodiments of the present disclosure will be described in detail below with reference to the accompanying drawings.

In the description of the present disclosure, it should be understood that the terms "upper" and "lower", indicating the orientation or positional relationship, are based on the orientation or positional relationship when the product is in normal use.

The terms "first" and "second" are used for descriptive purposes only and should not be construed as indicating or implying relative importance or implicitly specifying the number of technical features indicated. Therefore, a feature defined as "first" or "second" may explicitly or implicitly include at least one of that feature. The figures of embodiments of the present disclosure provide a coordinate system XYZ, where the positive direction of the X-axis represents the left direction, the negative direction of the X-axis represents the right direction, the positive direction of the Y-axis represents the front direction, the negative direction of the Y-axis represents the rear direction, the positive direction of the Z-axis represents the upper direction, and the negative direction of the Z- axis represents the lower direction.

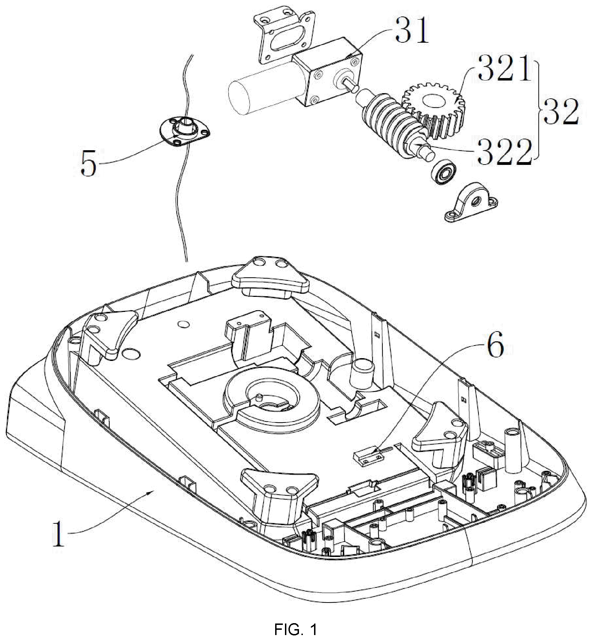

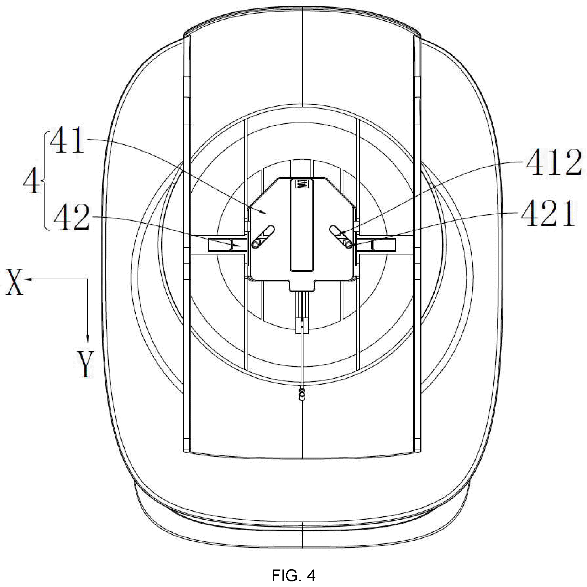

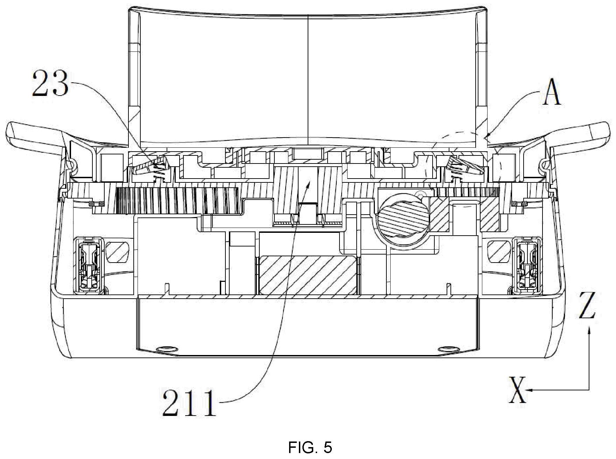

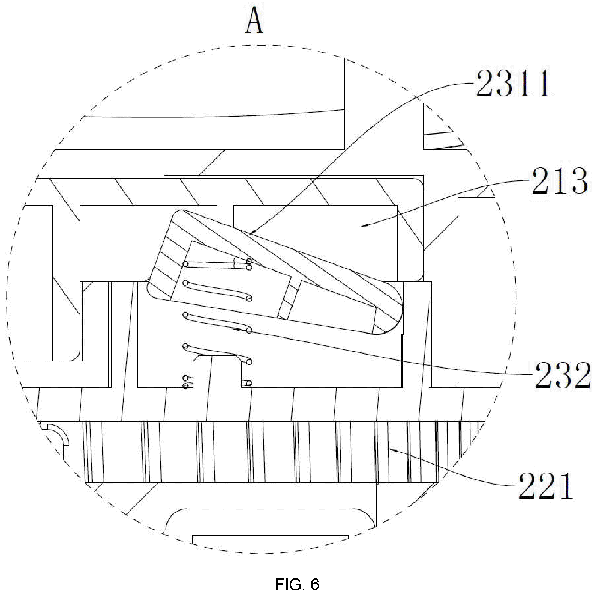

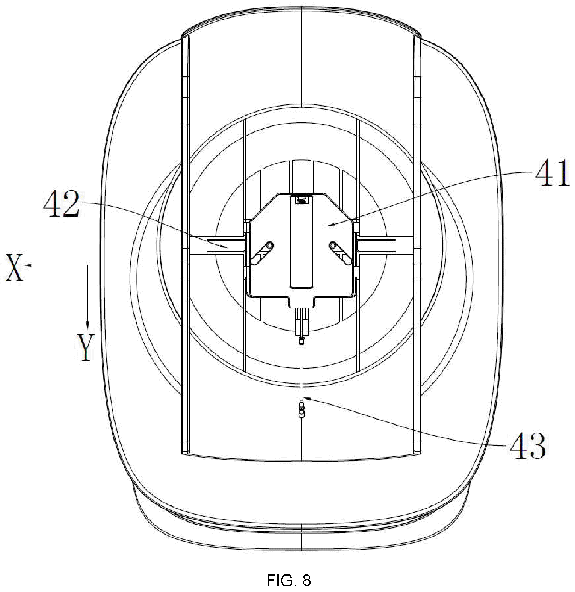

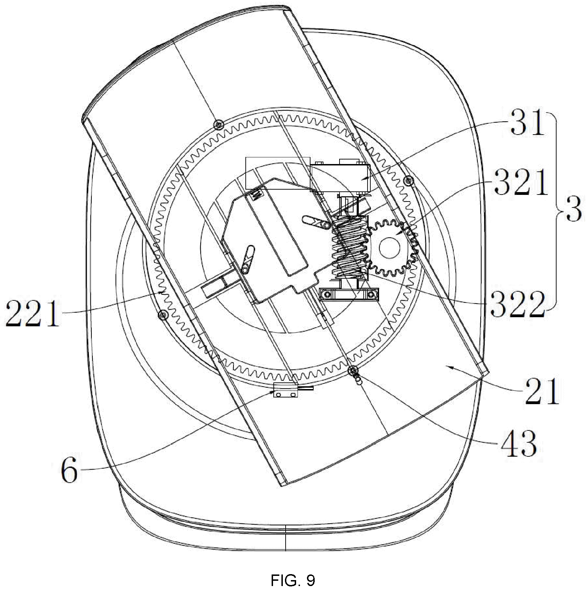

Referring to FIGS. 1 to 9, an embodiment of the present disclosure provides a seat body swivel structure, including a base 1, a rotary disc assembly 2, an electric rotation assembly 3, and a manual rotation assembly 4. The rotary disc assembly 2 includes a rotary disc 21, a gear disc 22, and a locking assembly 23 for locking or unlocking a relative position of the rotary disc 21 and the gear disc 22. The rotary disc 21 is adapted to be connected to the seat body, and the gear disc 22 is connected to the base 1. When the rotary disc 21 and the gear disc 22 are locked relative to each other, the electric rotation assembly 3 drives the gear disc 22 to rotate the seat body relative to the base 1. When the rotary disc 21 and the gear disc 22 are unlocked relative to each other, the manual rotation assembly 4 drives the rotary disc 21 to rotate the seat body relative to the base 1.

The base 1 is provided with a shaft for mounting the gear disc 22, allowing the gear disc 22 to rotate relative to the base 1. The gear disc 22 is able to rotate 360° forward or backward around the shaft. The electric rotation assembly 3 can only drive the gear disc 22 to rotate relative to the base 1 when it is powered. At this time, the rotary disc 21 and the gear disc 22 are locked relative to each other, thereby achieving electric rotation of the seat body relative to the base 1; when the electric rotation assembly 3 stops working, pushing the seat body will not cause the gear disc 22 to rotate relative to the base 1. When the electric rotation assembly 3 stops working and the rotary disc 21 and the gear disc 22 are unlocked relative to each other, manually pushing the seat body will cause the rotary disc 21 to rotate relative to the gear disc 22, thereby enabling the seat body to rotate relative to the base 1.

In this embodiment, the seat body swivel structure combines electric and manual rotation modes by locking or unlocking the rotary disc 21 and the gear disc 22 through the locking assembly 23. This allows parents or users to choose the appropriate rotation mode according to their actual needs. The electric rotation mode is suitable for daily use and can rotate the seat through the electric rotation assembly 3, while the manual rotation mode provides a backup rotation option when the electric rotation assembly 3 is not operational, independent of power supply. As a result, the convenience, safety, and flexibility of using the child safety seat are improved.

Optionally, as shown in FIG. 1, a slip ring 5 for power supply and communication is mounted on the base 1. The slip ring 5 includes a slip ring body and a wire that are rotatably connected to each other. The wire is configured to be electrically connected to the seat. The slip ring body is connected to the base 1. The rotary disc 21 is provided with a cable pass-through hole 211 for the wire to pass through.

In this embodiment, the wire of the slip ring 5 is capable of rotating 360° without restriction relative to the slip ring body. One end of the slip ring 5 is electrically connected to a power supply, which may be a self-contained power source (such as a battery pack) or a vehicle power supply. The other end is electrically connected to the seat via the wire to enable communication and power supply to the seat. The cable pass-through hole 211 is preferably located at the center of the rotary disc 21 so that the wire of the slip ring 5 passes through with a short wiring path. In this embodiment, the slip ring 5 is used to enable power supply and communication to the seat without affecting the rotation of the rotary disc 21. This prevents the wire from being snagged, allows the seat to rotate freely, and enables the wire to rotate at any angle, such that during rotation of the rotary disc 21, the wire generally maintains its original position. This ensures uninterrupted power delivery and communication, effectively extends the service life of the wires, and prevents damage that could affect the normal operation of the seat.

Optionally, as shown in FIGS. 1, 5, 7, and 9, the electric rotation assembly 3 includes a drive motor 31 and a worm gear assembly 32 that are in a transmission connection with each other. The worm gear assembly 32 includes a worm wheel 321 and a worm 322 that mesh with each other. The worm 322 is connected to a motor shaft of the drive motor 31. The gear disc 22 is provided with an inner ring gear 221 that meshes with the worm wheel 321.

The worm 322 is fixedly connected to the motor shaft of the drive motor 31, and the inner ring gear on the gear disc 22 meshes with the worm wheel 321, so that the drive motor 31 drives the worm 322 to rotate synchronously, which in turn drives the worm wheel 321 to rotate synchronously. The worm wheel 321 meshes with the inner ring gear 221, causing the gear disc 22 to rotate synchronously, thus realizing the electric rotation function of the seat. The base 1 is provided with a shaft around which the worm wheel 321 rotates. The meshing structure between the worm wheel 321 and the worm 322 further provides a self-locking function. When the drive motor 31 stops driving the worm 322 to rotate at any angle, the gear disc 22 is locked at any angular position, because the worm wheel 321 cannot drive the worm 322 in reverse. When worm 322 is locked, the inner ring gear 221 of gear disc 22 is engaged with the worm gear 321 , realizing an automatic locking function. The drive motor 31, the worm gear 321 and the worm 322 are all located on the inner side of gear disc 22, which not only allows for a more reasonable layout of the seat structure, but also, since the diameter of worm gear 321 located on the inner side is definitely smaller than the diameter of inner ring gear 221 of gear disc 22, the structure in which a small gear drives a large gear rotation also provides an effective force-saving mechanism..

Optionally, as shown in FIGS. 1, 2, and 9, a circuit board is also included. The electric rotation assembly 3 includes a drive motor 31. A position signal sensor 6 is arranged on the base 1. The gear disc 22 is provided with a plurality of position signal devices arranged at intervals. One of the plurality of position signal devices is selectively sensed in cooperation with the position signal sensor 6. The position signal sensor 6 and the drive motor 31 are both electrically connected to the circuit board.

When the seat is rotated by a desired angle, the position signal sensor 6 on the base 1 and the corresponding position signal device on the gear disc 22 generate a sensing signal. Upon receiving the corresponding signal, the circuit board controls the drive motor 31 to stop working. The position signal sensor 6 and the position signal devices are implemented using RFID technology, namely, the position signal sensor 6 is a reader/writer and the position signal devices are electronic tags. Each position signal device is unique, so that the position signal sensor 6 can accurately detect the rotational angular position of the seat. In this embodiment, the number of position signal devices is preferably four, corresponding to the positions of the seat facing forward, the seat facing right, the seat facing rearward, and the seat facing left, respectively.

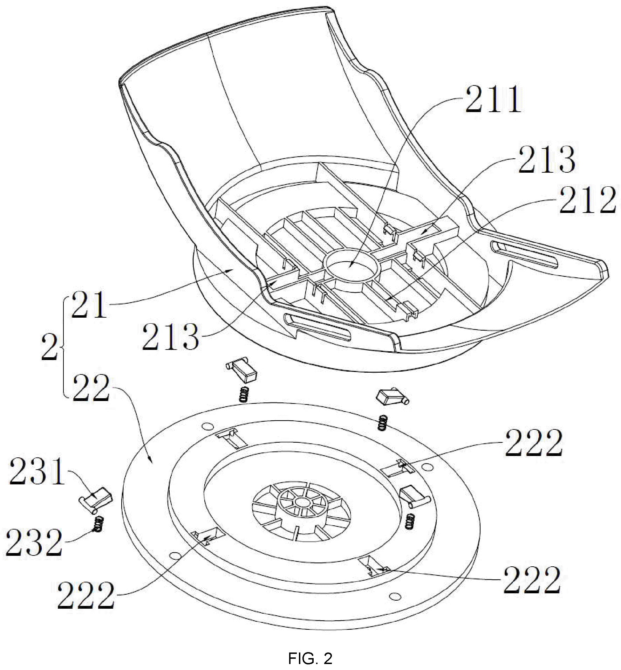

Optionally, referring to FIGS. 2 to 9, the manual rotation assembly 4 includes a linkage base 41 and releasing switches 42 that are movably connected to each other. The linkage base 41 is movably connected to the rotary disc 21. When the linkage base 41 moves relative to the rotary disc 21, the releasing switches 42 cause the locking assembly 23 to unlock or lock. When the linkage base 41 moves relative to the rotary disc 21, the releasing switches 42 move in translation or rotation, thereby causing the locking assembly 23 to unlock or lock. The structure is simple and reliable.

Optionally, as shown in FIGS. 2 to 9, the linkage base 41 is provided with a sliding groove 411 and inclined slots 412, the rotary disc 21 is provided with a track 212 that is slidably connected to the sliding groove 411 along a front and rear direction, and the releasing switch 42 is each provided with a movable pin 421 that is slidably connected to each inclined slot 412. When the linkage base 41 moves in the front and rear direction, the releasing switches 42 move in the left and right direction with the cooperation between the movable pin 421 and the inclined slots 412, so that the releasing switches 42 drive the locking assembly 23 to unlock or lock.

Taking the initial position of the seat body as a reference, the length direction of the sliding groove 411 coincides with the front and rear direction. The number of inclined slots 412 is two. The two inclined slots 412 are symmetrically arranged, forming an overall V-shape. In the initial locked position, the movable pins 421 cooperate with the front end of the inclined slots 412. Upon unlocking, the movable pins 421 cooperate with the rear end of the inclined slots 412. That is, when the linkage base 41 moves forward, the two releasing switches 42 move closer to each other to unlock the locking assembly 23, and when the linkage base 41 moves backward, the two releasing switches 42 move further away from each other to lock the locking assembly 23.

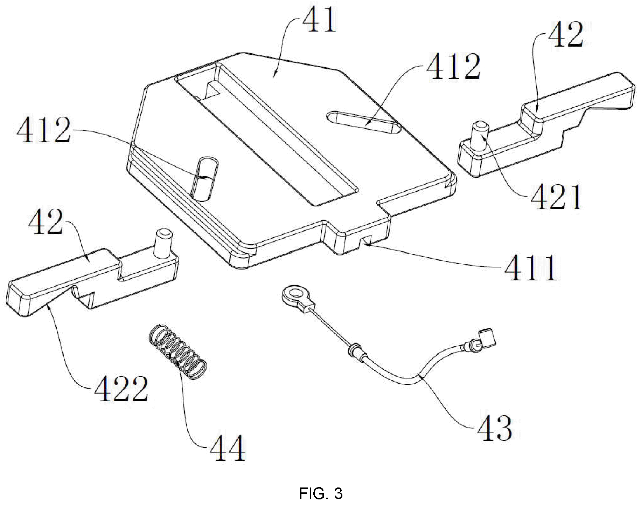

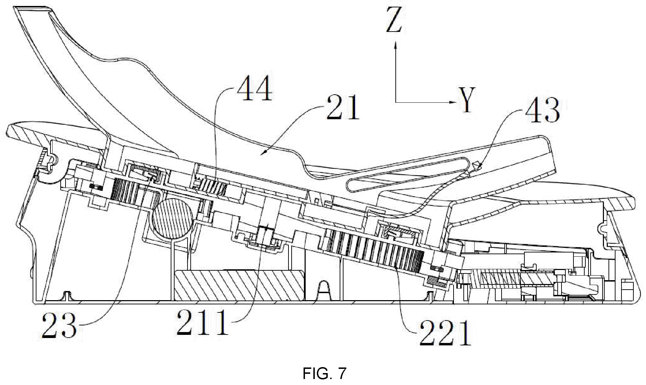

Optionally, as shown in FIGS. 3 and 7, the manual rotation assembly 4 further includes a pull cable 43 and a first return member 44. Two ends of the first return member 44 are connected to the rotary disc 21 and the linkage base 41, respectively. The pull cable 43 is connected to the linkage base 41. The first return member 44 is preferably a compression spring. One end of the pull cable 43 is fixedly connected to the linkage base 41, and the other end is fixedly connected to a seat handle. The user can pull the pull cable 43 forward to move the linkage base 41 forward, thereby unlocking the locking assembly 23 and enabling manual rotation. At this point, the first return member 44 is in a compressed state. Upon releasing the pull cable 43, the spring force of the first return member 44 pushes the linkage base 41 to automatically return, causing the locking assembly 23 to relock.

Optionally, as shown in FIGS. 2, 5, 6, and 7, the locking assembly 23 includes rotation position pins 231 and second return members 232. The gear disc 22 is provided with shaft recesses 222 for hinged connection with the rotation position pins 231. Two ends of each second return member 232 are respectively connected to the respective shaft recess 222 and the rotation position pin 231. The rotary disc 21 is provided with gear position grooves 213 adapted for cooperating with the rotation position pins 231. The releasing switches 42 are movably mounted in the gear position grooves 213. The second return members 232 are preferably compression springs. The rotation position pins 231 are respectively hingedly connected to the shaft recesses 222 to lock the relative position between the rotary disc 21 and the gear disc 22. The number of rotation position pins 231 is no less than two so that the seat body can be positioned at different angles. The gear position grooves 213 are configured to cooperate with the rotation position pins 231 for locking. The number of the gear position grooves 213 is at least one, and in this embodiment, two gear position grooves are provided, which makes the angular positioning of the seat body more stable and reliable. The shaft recesses 222 have a certain depth to accommodate the rotation position pins 231. When locked, under the elastic force of the second return members 232, the rotation position pins 231 move out of the shaft recesses 222 and are engaged with the gear position grooves 213 for electric rotation. When unlocked, the rotation position pins 231 are withdrawn from the gear position groove 213 and move into the shaft recesses 222 for manual rotation. The releasing switches 42 can move left and right in the gear position grooves 213 to drive the rotation position pins 231 in and out of the gear position grooves 213, thereby allowing a simple and reliable structure of the locking assembly 23.

In this embodiment, when a consumer takes a child into or out of the car equipped with the child safety seat, the desired rotation position can be achieved through adjustment via electric rotation. When adjusting by electric rotation, the rotary disc 21 is fixed to the gear disc 22 and the two form an integral structure by the rotation position pins 231. When the drive motor 31 drives the worm 322, the worm 322 then drives the worm wheel 321 to rotate, so that the gear disc 22 is driven to rotate by the worm wheel 321. As a result, the seat body is rotated by the rotary disc 21. When the seat body is rotated by a desired angle, the position signal sensor 6 on the base 1 and the corresponding position signal device on the rotary disc 21 generate a signal, and the motor stops working.

Optionally, as shown in FIGS. 2, 3, and 6, each releasing switch 42 is provided with a first inclined surface 422, and each rotation position pin 231 is provided with a second inclined surface 2311 adapted to abut against the first inclined surface 422. By using the mutual abutment of the two inclined surfaces, the releasing switch 42 and the rotation position pin 231 can push each other. When the locking assembly 23 performs an unlocking operation, the first inclined surface 422 contacts the second inclined surface 2311, pushing the rotation position pin 231 out of the gear position groove 213 and into the shaft recess 222, thereby unlocking the rotary disc 21 and gear disc 22 relative to each other, so as to enable manual rotation operation. When the pull cable 43 is released, the releasing switches 42 return under the action of the linkage base 41. When the rotation position pins 231 are engaged in the subsequent gear position grooves 213, the first inclined surfaces 422 and the second inclined surfaces 2311 will not contact each other. Under the action of the second return members 232, the rotation position pins 231 can be firmly engaged in the gear position grooves 213, completing the angular adjustment of the seat body.

In this embodiment, when the consumer takes a child into or out of the car equipped with a child safety seat that is powered off, the consumer can manually adjust and rotate the seat. Specifically, the consumer pulls the handle, which drives the pull cable 43, which in turn drives the linkage base 41. The linkage base 41 slides forward, and the releasing switches 42 move translationally inward through the inclined slots 412 arranged on the linkage base 41. The rotation position pins 231 rotate and disengage from the gear position grooves 213 on the rotary disc 21 under the relative sliding between the inclined surfaces of the rotation position pins 231 and the releasing switches 42. At this point, the gear disc 22 is stationary due to self-locking, the drive motor 31 is de-energized, and the rotary disc 21 begins to rotate relative to the gear disc 22. When the rotary disc 21 is rotated to a desired position, the rotation position pins 231 are automatically locked in the corresponding gear position grooves 213 on the rotary disc 21, driven by the second reset member 232 underneath, thus completing the rotation.

Another embodiment of the present disclosure provides a child safety seat, including the aforementioned seat body swivel structure.

In this embodiment, the child safety seat adopts a locking assembly 23 to lock or unlock the rotary disc 21 and gear disc 22, combining both electric and manual rotation means. This allows parents or users to choose the appropriate rotation means according to their actual needs. The electric rotation means is suitable for daily use, allowing the rotation of the seat via the electric rotation assembly 3. The manual rotation means provides a backup rotation option when the electric rotation assembly 3 is not operational, independent of power supply. As a result, the convenience, safety, and flexibility of using the child safety seat are improved.

Although the disclosure is as described above, the scope of protection of the present disclosure is not limited thereto. Those skilled in the art can make various changes and modifications without departing from the spirit and scope of the present disclosure, and all such changes and modifications shall fall within the scope of protection of the present disclosure.

## Claims

1. A seat body swivel structure, comprising a base (1), a rotary disc assembly (2), an electric rotation assembly (3), and a manual rotation assembly (4), wherein the rotary disc assembly (2) includes a rotary disc (21), a gear disc (22), and a locking assembly (23) for locking or unlocking a relative position of the rotary disc (21) and the gear disc (22), the rotary disc (21) is adapted to be connected to the seat body, and the gear disc (22) is connected to the base (1); when the rotary disc (21) and the gear disc (22) are locked relative to each other, the electric rotation assembly (3) drives the gear disc (22) to rotate the seat body relative to the base (1); when the rotary disc (21) and the gear disc (22) are unlocked relative to each other, the manual rotation assembly (4) drives the rotary disc (21) to rotate the seat body relative to the base (1).

2. The seat body swivel structure according to claim 1, wherein a slip ring (5) for power supply and communication is mounted on the base (1), the slip ring (5) includes a slip ring body and a wire that are rotatably connected to each other, the wire is adapted to be electrically connected to the seat, the slip ring body is connected to the base (1), and the rotary disc (21) is provided with a cable pass-through hole (211) for the wire to pass through.

3. The seat body swivel structure according to claim 1, wherein the electric rotation assembly (3) includes a drive motor (31) and a worm gear assembly (32) that are in a transmission connection with each other, the worm gear assembly (32) includes a worm wheel (321) and a worm (322) that mesh with each other, the worm (322) is connected to a motor shaft of the drive motor (31), and the gear disc (22) is provided with an inner ring gear (221) that meshes with the worm wheel (321).

4. The seat body swivel structure according to claim 3, further comprising a circuit board, wherein a position signal sensor (6) is arranged on the base (1), a plurality of position signal devices are arranged on the gear disc (22) at intervals, one of the plurality of position signal devices is selectively sensed in cooperation with the position signal sensor (6), and the position signal sensor (6) and the drive motor (31) are both electrically connected to the circuit board.

5. The seat body swivel structure according to any one of claims 1-4, wherein the manual rotation assembly (4) includes a linkage base (41) and a releasing switch (42) that are movably connected to each other, the linkage base (41) is movably connected to the rotary disc (21), and when the linkage base (41) moves relative to the rotary disc (21), the releasing switch (42) drives the locking assembly (23) to unlock or lock.

6. The seat body swivel structure according to claim 5, wherein the linkage base (41) is provided with a sliding groove (411) and an inclined slot (412), the rotary disc (21) is provided with a track (212) that is slidably connected to the sliding groove (411) along a front and rear direction, and the releasing switch (42) is provided with a movable pin (421) that is slidably connected to the inclined slot (412), when the linkage base (41) moves in the front and back direction, the releasing switch (42) moves in a left and right direction under the cooperation of the movable pin (421) and the inclined slot (412), so as to enable the releasing switch (42) to drive the locking assembly (23) to unlock or lock.

7. The seat body swivel structure according to claim 5, wherein the manual rotation assembly (4) further includes a pull cable (43) and a first return member (44), two ends of the first return member (44) are respectively connected to the rotary disc (21) and the linkage base (41), and the pull cable (43) is connected to the linkage base (41).

8. The seat body swivel structure according to claim 5, wherein the locking assembly (23) includes rotation position pins (231) and second return members (232), the gear disc (22) is provided with shaft recesses (222) for hinged connection with the rotation position pins (231), two ends of each second return member (232) are respectively connected to the respective shaft recess (222) and the respective rotation position pin (231), the rotary disc (21) is provided with a gear position groove (213) adapted for cooperating with the rotation position pins (231), and the releasing switch (42) is movably mounted in the gear position groove (213).

9. The seat body swivel structure according to claim 8, wherein the releasing switch (42) is provided with a first inclined surface (422), and each of the rotation position pins (231) is provided with a second inclined surface (2311) adapted to abut against the first inclined surface (422).

10. A child safety seat, comprising the seat body swivel structure according to any one of claims 1 to 9.
